# EUROPÄISCHE PATENTANMELDUNG

(11) **EP 2 404 807 A2**
(43) Veröffentlichungstag der Anmeldung: **11.01.2012**
(21) Anmeldenummer: 11172747.5
(22) Anmeldetag: 05.07.2011
(51) Int. Cl.: B62B 7/10

(54) **Fahrgestell für einen Kinder- oder Puppenwagen**

(30) Priorität: 09.07.2010 DE 202010008030 U; 30.11.2010 DE 202010013015 U
(71) Anmelder: Beger, Udo, 84034 Landshut (DE)
(72) Erfinder: Beger, Udo, 84034 Landshut (DE)
(74) Vertreter: Pröll, Jürgen

(57) **Zusammenfassung**

Ein Fahrgestell, insbesondere für einen Kinder- oder Puppenwagen, weist zwei Seitenteile aus je einem von vorne nach hinten und von unten nach oben ansteigenden Schrägholm (1a,1b) und einem hiermit untenseitig gelenkig verbundenen unteren Holm (2a,2b), der sich von vorne nach hinten erstreckt und an dem rückseitigen Ende mindestens einen Lagerhalter (4a,4b) für eine Hinterradanordnung (3a,3b) und an dem vorderen Ende mindestens einen Lagerhalter (4a,4b) für eine Vorderradanordnung (5a,5b) aufweist, und Aufnahmen und/oder Befestigungspunkte (6) mindestens an den Schrägholmen für die Befestigung eines Sitz- (7) und/oder Liegeeinsatzes auf. Die Seitenteile sind über zwei Kreuzgestänge zum Zwecke des gleichmäßigen Zusammenfaltens und Aufstellens verbunden, wobei ein Kreuzgestänge zwischen den unteren Holmen und den die Schrägholme mit den unteren Holmen verbindenden Stützholmen und ein zweites Kreuzgestänge zwischen den unteren Holmen angebracht sind, und die jeweils oberen und hinteren Drehgelenke verschiebbar an den Stützstreben und den untern Holmen gelagert sind.

## Beschreibung

Die Erfindung betrifft ein Fahrgestell, insbesondere für einen Kinder- oder Puppenwagen, aufweisend zwei Seitenteile aus je einem von vorne nach hinten und von unten nach oben ansteigenden Schrägholm und einen hiermit untenseitig gelenkig verbundenen unteren Holm, der sich von vorne nach hinten erstreckt und an dem rückseitigen Ende mindestens einen Lagerhalter für eine Hinterradanordnung und an dem vorderen Ende mindestens einen Lagerhalter für eine Vorderradanordnung und Aufnahmen und/oder Befestigungspunkte mindestens an den Schrägholmen für die Befestigung eines Sitz- und/oder Liegeeinsatzes.

Ein Kinderwagengestell dieser Art ist aus der US 2009/0278335 A1 bekannt und weist an jedem der beiden unteren Holme ein Gelenk für eine Stützstrebe auf, die obenseitig an einem ortsfesten Drehlager an der Verlängerung einer Schiebestange schwenkbeweglich befestigt ist, die ihrerseits verschwenkbar an dem Ende eines Schrägholmes gelagert ist. Zwischen dem Gelenk des Schrägholmes an dem unteren Holm und dem Gelenk für die Stützstrebe an dem unteren Holm ist ein Schwenkgelenk mit einer Aufnahme zur schwenkbeweglichen Lagerung des vorderen Endes einer Stange eines Kreuzgestänges vorgesehen, dessen hinteres Ende schwenkbeweglich in einem an der Stützstrebe des anderen Seitenteils angebrachten Drehgelenk befestigt ist. Zusätzlich ist zwischen den beiden unteren Holmen ein faltbares Spreizgestänge aus je zwei quer zur Längsrichtung des Fahrgestells angeordneten Stangenpaaren vorgesehen, die schwenkbeweglich an die unteren Holme mit den äußeren Enden an einer Schiebestange angebracht sind. Durch Verschieben der verbindenden Schiebestange nach vorne werden die Spreizstangen V-förmig aufeinanderzu bewegt. An den oberen Enden der Schiebestangen ist ein Sicherungsgestänge aus zwei schwenkbeweglich an den Schiebestangen gelagerten Stangen vorgesehen, deren beiden inneren Enden in einem Schlosssystem gelagert sind, das die beiden Stangen in einer gestreckten Position hält, wenn das Wagengestell aufgestellt ist. Weiterhin ist ein Betätigungselement vorgesehen, das diese Verbindung aufzulösen gestattet, so dass ein V-förmiges Zusammenklappen beim Verfahren des Gestells in den zusammengelegten Zustand ermöglicht wird. Das Zusammenfahren des Gestells wird über das schräg gestellte Kreuzgestänge beim Vorschwenken der Schiebestangen durch Mitnahme des Kreuzgestänges über die Verlängerungen bewirkt und ist durch die fixierte Lagerung des Kreuzgestänges nur eingeschränkt möglich.

Aus der DE 693 02 959 T2 ist ein klappbarer Kinderwagenrahmen bekannt, der auch als Standfuß benutzt werden kann und aus zwei parallel angeordneten Seitenteilen besteht. Die Seitenteile bestehen aus hinteren Stützstreben und vorderseitigen Schrägholmen. An den Schrägholmen befinden sich Gelenke für die Stützstreben und für nach hinten abklappbare Schiebestangen, die das Gelenk um einen definierten Endabschnitt überstehen. Mit den Enden dieser Endabschnitte sind Stangen eines Kreuzgestänges verbunden, deren andere Enden an den Stützstreben angelenkt sind, so dass ein zwangsweises Zusammenfahren der Seitenteile gegeben ist, wenn die Schiebestangen nach hinten abgeklappt werden. Zwangsweise erfolgt dabei eine Bewegungstransformation, die die beiden Seitenteile nach vorheriger Entriegelung der Querverbindung aufeinanderzu bewegt.

Aus der DE 80 02 653 U1 ist ein klappbares Fahrgestell eines Kinderwagens mit zwei einander gegenüberstehenden seitlichen Tragegestängen bekannt, welche jeweils in ihrem mittleren Bereich gelenkig miteinander verbundene vordere und hintere Stützen aufweisen. An den oberen Enden der vorderen Stützen sind Griffstreben bzw. Schiebestangen angelenkt. Ferner ist eine Bodenkreuzverstrebung aus zwei in ihrem mittleren Bereich gelenkig miteinander verbundenen Streben vorgesehen, welche mit ihren freien Enden an den unteren Endstücken der einander diagonal gegenüberliegenden vorderen und hinteren Stützen angelenkt sind. Die freien Enden der Bodenkreuzverstrebung (Kreuzgestänge) sind zur Versteifung des Fahrgestells über seitliche Längsstreben miteinander verbunden. Die Längsstreben bestehen aus teleskopartig ineinander verschiebbare Elemente, so dass beim Zusammenfahren des Gestells eine dem Spreizweg entsprechende Verlängerung erfolgt. Eine weitere hintere Kreuzverstrebung, die an L-förmigen Beschlägen an dem Kreuzungspunkt der seitlichen Tragegestänge angelenkt ist, ist zusätzlich vorgesehen, wobei die Schwenklager auf den Holmen verschiebbar angeordnet sind. Durch diese Anordnung lässt sich das Gestell schnell und mühelos auf eine äußerst kleine Abmessung zusammenklappen. Die Schiebestangen können dabei nach vorne geklappt werden. Der Abstand der Räder vergrößert sich allerdings beim Zusammenlegen, so dass ein solcher Kinderwagen oftmals nicht in den Kofferraum eines Fahrzeuges hineingestellt werden kann.

Ausgehend vom vorbekannten Stand der Technik liegt der Erfindung die Aufgabe zugrunde, ein Fahrgestell so weiterzubilden, dass dieses eine hohe Stabilität aufweist, einfacher zu bedienen ist und einen noch kleineren Stauraum benötigt als die bekannten zusammengeklappten Fahrgestelle. Ferner soll ein gleichmäßiges Zusammenklappen des Fahrgestells ermöglicht werden.

Die Aufgabe löst die Erfindung durch Ausgestaltung des Fahrgestells gemäß der im Anspruch 1 angegebenen technischen Lehre.

Das Fahrgestell nach der Erfindung weist zwei Seitenteile auf aus je einem von vorne nach hinten und von unten nach oben ansteigenden Schrägholm und einem hiermit untenseitig gelenkig verbundenen unteren Holm, der sich von vorne nach hinten erstreckt und an dem rückseitigen Ende mindestens einen Lagerhalter für eine Hinterradanordnung und an dem vorderen Ende mindestens einen Lagerhalter für eine Vorderradanordnung aufweist, und Aufnahmen und/oder Befestigungspunkte mindestens an den Schrägholmen für die Befestigung eines Sitz- und/oder Liegeeinsatzes, wobei an jedem Seitenteil in paralleler Zuordnung
- an dem unteren Holm ein Gelenk für eine Stützstrebe vorgesehen ist, die obenseitig gelenkig an einem unteren Ende einer um ein Schwenklager an dem Schrägholm vorklappbar gelagerten Schiebestange, welches Ende das Schwenklager übersteht, oder an einem Verschiebelager am Schrägholm schwenkbeweglich befestigt ist,
- zwischen dem Gelenk des Schrägholmes an dem unteren Holm und dem Gelenk für die Stützstrebe an dem unteren Holm ein Schwenkgelenk mit einer Aufnahme zur schwenkbeweglichen Lagerung des vorderen Endes einer Stange eines ersten Kreuzgestänges vorgesehen ist, dessen hinteres Ende schwenkbeweglich an einem verschiebbar auf oder an der Stützstrebe des anderen Seitenteils angebrachten Drehgelenk befestigt ist, und
- ein zweites Kreuzgestänge zwischen den unteren Holmen angebracht ist, wobei die vorderen Enden der Stangen des zweiten Kreuzgestänges um je eine vertikale Achse schwenkbar an je einem Gelenk angelenkt sind und die hinteren Enden der Stangen um eine vertikale Achse schwenkbar an je einem Verschiebegelenk auf dem unteren Holm des jeweils anderen Seitenteils angebracht sind.

Zusätzlich zu dem ersten schräg gestellten Kreuzgestänge ist nach der Erfindung also ein zweites Kreuzgestänge zwischen den unteren Holmen eingebracht, wobei die vorderen Enden der Stangen des zweiten Kreuzgestänges um je eine vertikale Achse schwenkbar an je einem Gelenk befestigt sind und die hinteren Enden der Stangen um eine vertikale Achse schwenkbar an je einem Verschiebegelenk auf den unteren Holmen des jeweils anderen Seitenteils angebracht sind. Hierdurch wird die Stabilität des Gestells insgesamt erhöht, aber auch ein Zusammenfalten des Gestells auf engstem Raum ermöglicht. Ferner fährt das Gestell wesentlich gleichmäßig zusammen, da kein gesondertes Spreizgestänge betätigt werden muss, um die Bewegung des ersten Kreuzgestänges freizugeben und die Spreizung im Wesentlich über das untere Kreuzgestänge erfolgt und die parallele Verschiebung der Seitenteile durch das schräge Kreuzgestänge. Auch können an den Verschiebegelenken Rastsperren vorgesehen sein, um das zweite Kreuzgestänge in der Aufstellposition des Gestells an den unteren Holmen sichern zu können. Um das Zusammenlegen zu ermöglichen, muss dann die mindestens eine Rastsperre wieder gelöst werden, damit die Verschiebegelenke sich beim Zusammenlegen des Gestells auf den unteren Holmen verschieben können.

In einer anderen Ausführung ist alternativ zum ersten Kreuzgestänge oder ergänzend hierzu ein weiteres Kreuzgestänge zwischen den beiden Stützstreben vorgesehen, um ein paralleles Zusammenfahren der beiden Seitenteile beim Zusammenklappen des Fahrgestells abzustimmen.

Anstelle eines zusätzlichen Kreuzgestelles zwischen den beiden Stützstreben kann auch ein anderes, die Aufstellung sicherndes Spreizgestänge vorgesehen sein. In einfachster Ausführung kann zwischen den Stützstreben ein Spreizgestänge aus mindestens zwei Stangen, die mittig miteinander direkt oder über ein Stellglied verbunden und außenseitig an den Stützholmen angelenkt sind, vorgesehen sein. Wenn beide Stangen horizontal verlaufen oder in einem definierten Winkel aufgestellt sind, können sie über ein Schlosssystem, beispielsweise ein überrastendes Schwenkteil, in der Lage gesichert werden, wodurch zugleich das Fahrgestell in der Aufstellposition gesichert ist. Wird das Sicherungselement entfernt, z. B. weggeschwenkt, kann durch Hochziehen der Verbindung der Stangen ein Zusammenziehen des Gestells bewirkt werden. Auch können zwei solche Stangenpaare untereinander angeordnet und über eine Verbindungsstange miteinander verbunden sein. Weitere Beispiele der Ausgestaltung solcher Spreizgestelle sind in der DE 601 14 555 T2 beschrieben und können hier zur Anwendung kommen.

Erfindungsgemäße Ausgestaltungen sind grundsätzlich auf alle Fahrgestelle anwendbar, bei denen die Seitenteile parallel zueinander angeordnet sind und mit vorderen und hinteren Rädern versehen sind, wodurch im aufgestellten Zustand ein stabiler Verbund herstellbar ist. Die Stabilität wird erreicht durch die diagonal angeordnete ersten und zweiten Kreuzgestänge, die die unteren Holme einerseits miteinander und diese andererseits mit den Stützstreben verbinden.

Wenn in ein solches Gestell ein Liegeeinsatz eingesetzt wird, der beispielsweise an den Aufnahmepunkten an den Schrägholmen und den Stützstreben fixiert ist, so sind praktisch keine weiteren Mittel erforderlich, um einen stabilen Kinder- oder Puppenwagen zu erstellen. Die Drehmomente werden dabei auf den beispielsweise aus einem Kunststoffkörper gefertigten eingesetzten Liegewageneinsatz übertragen und die Kräfte absorbiert. Wenn ein Sitzeinsatz eingesetzt wird und dieser über ein Sitzteil beide Seitenteile ebenfalls verbindet, so ist auch hierüber ein gesicherter Verbund gegeben.

Die beiden oberen Enden der Stangen des schräg verlaufend angeordneten Kreuzgestänges sind gemäß der Erfindung an verschiebbar auf den Stützstreben angeordneten Drehgelenken befestigt. Mit diesen verschiebbaren Drehgelenken können Fixierelemente gekoppelt sein, beispielsweise können an den verschiebbaren Drehgelenken federbelastete Rasten angebracht sein, die mindestens im aufgestellten Zustand des Fahrgestells in korrespondierende Löcher, Ausnehmungen oder auch Sicken in den Stützstreben sichernd einrasten. Über einen Auslösehebel ist diese Verbindung jederzeit wieder aufhebbar, so dass die Sicherungsfunktion dann nicht mehr besteht und das Drehlager beim Zusammenlegen des Gestells verschoben werden kann. Der Verschiebeweg ist erforderlich, damit ein Längenausgleich der sich beim Zusammenklappen des Kreuzgestänges ergebenden vergrößernden Länge erfolgt. Beim Aufstellen erfolgt hingegen eine Verkürzung des Kreuzgestänges. Über die Rasten ist also zugleich eine Aufstellsicherung gegeben und ferner auch eine Sicherung bezüglich des aufgestellten Gestells. Zusätzliche Maßnahmen sind in diesem Fall nicht notwendig. Es kann aber auch zwischen den vorklappbaren Schiebestangen eine zusätzliche Spreizsicherung vorgesehen sein, die über ein Schlosselement aufgelöst werden kann, um ein Zusammenklappen des Gelenkes in horizontaler Richtung zu ermöglichen. Da die oberen Enden der Stützstreben an den Überstandsenden der schwenkbar gelagerten Schiebestangen angelenkt sind, werden die Stützstreben automatisch beim Vorschwenken der Schiebestangen nach hinten verschwenkt. Dabei gleiten die verschiebbaren Drehlager nach unten. Das Gestell kann in dieser entsicherten Position auf einfache Weise durch eine Seitenkraft zusammengedrückt werden.

Zusätzlich zu dem ersten schräg gestellten Kreuzgestänge ist nach der Erfindung ein zweites Kreuzgestänge zwischen den unteren Holmen angebracht sein, wobei die vorderen Enden der Stangen des zweiten Kreuzgestänges um je eine vertikale Achse schwenkbar an je einem Gelenk befestigt sind und die hinteren Enden der Stangen um eine vertikale Achse schwenkbar an je einem Verschiebegelenk auf den unteren Holmen des jeweils anderen Seitenteils angebracht sind. Hierdurch wird die Stabilität des Gestells insgesamt erhöht. Auch können an den Verschiebegelenken Rastsperren vorgesehen sein, um das zweite Kreuzgestänge in der Aufstellposition des Gestells an den unteren Holmen sichern zu können. Um das Zusammenlegen zu ermöglichen, muss dann die mindestens eine Rastsperre wieder gelöst werden, damit die Verschiebegelenke sich auf den unteren Holmen beim Zusammenlegen des Gestells verschieben können.

Um eine zwangsweise Zusammenführung der unteren Holme und der Schrägholme beim Zusammenlegen zu gewährleisten, wenn die Schiebestangen nach vorne verschwenkt werden, ist in weiterer Ausgestaltung vorgesehen, dass an mindestens einer Stützstrebe eine Kupplungsstange angelenkt ist, die zur Bewegungstransformation der Schwenkbewegung der Stützstreben auf ein Verschiebegelenk auf dem unteren Holm an der Stützstrebe und dem Verschiebegelenk angelenkt ist, wobei beim Zusammenlegen des Gestells das Verschiebegelenk in Richtung des Lagerhalters für die Hinterradanordnung verschoben und beim Aufstellen vorgezogen wird.

Es ist ersichtlich, dass die schräg gestellten Koppelstangen beim Niederschwenken der Stützstreben automatisch die Verschiebegelenke nach hinten in Richtung der Hinterräder verschieben, wodurch die Schere des zweiten Kreuzgestänges zusammengezogen wird und gleichzeitig die unteren Holme aufeinanderzu schwenken. Die Stützstreben sind zweckmäßigerweise an den unteren Holmen, in etwa im mittleren Bereich zwischen den Vorder- und Hinterrädern, vorgesehen, während das Schiebegelenk für das zweite Kreuzgestänge hinter dem Anlenkungspunkt der Stützstreben vorgesehen ist. Durch diese Anordnung ist eine sehr hohe Stabilität auch dann gegeben, wenn die beiden Seitenteile des Kinder- oder Puppenwagengestells als Einzelteile vorderseitig nicht miteinander verbunden und parallel verlaufend angeordnet sind. In ein solches Gestell sind in bekannter Weise Einsätze einsetzbar; es ist aber auch möglich, ein Sitzteil, das ausschließlich aus Stoffbahnen besteht, an den Schrägholmen und den Stützstreben zu fixieren sowie eine Rückenlehne an der Schiebestange. Auch dann ist eine hohe Stabilität des Gestells gegeben.

In weiterer Ausgestaltung kann ferner vorgesehen sein, dass die Stangen und die hinteren Enden und die Stangen des zweiten Kreuzgestänges jeweils an einem gemeinsamen Schiebegelenk angebracht sind, so dass keine weiteren Überbrückungsglieder erforderlich sind. Ebenso kann das Dreh-/Schwenkgelenk für das erste Kreuzgestänge an den unteren Holmen zugleich auch das Schwenkgelenk des zweiten Kreuzgestänges an den unteren Holmen bilden. Es versteht sich von selbst, dass bei Ausführungen der einzelnen Stangen des Kreuzgelenkes in Rohrform hier Aufnahmen an den Dreh-/Schwenkgelenken vorzusehen sind, in die die Enden der Stangen einsetzbar sind. Die Stangen selbst sind in etwa X-förmig verlaufend angeordnet und immer in einem Kreuzungspunkt schwenkbeweglich miteinander verbunden.

Als weitere Spreizsicherung kann zwischen den Schiebestangen im oberen Abschnittsbereich ein Sicherungsgestänge aus zwei schwenkbeweglich gelagerten Stangen vorgesehen sein, deren beiden inneren Enden in einem Schlosssystem gelagert sind. Das Schlosssystem richtet die beiden Stangen in einer gestreckten Position im aufgestellten Zustand des Wagengestells aus und behält diese Position bei, bis über einen Auslösemechanismus ein Zusammenfalten der beiden Stangen beim Zusammenlegen des Gestells ermöglicht wird. Alternativ kann auch ein geteilter Schiebebügel vorgesehen sein, dessen beiden Teile über ein Rastkupplung miteinander und deren äußeren Enden mittels Gelenke an den Enden der Schiebestangen schwenkbeweglich befestigt sind. Nach dem Lösen der Rastkupplung können die Teile des Schiebebügels eingeklappt werden.

Als Sicherung ist in weiterer Ausgestaltung der Erfindung an mindestens einem der Griffe ein Betätigungselement angebracht, das mit einem Gestänge oder mit einem Bowdenzug gekoppelt ist, der in oder an der Schiebestange geführt ist und einen Verriegelungszapfen am unteren Ende der Schiebestange oder eine übergleitende Hülse aus einer Verriegelungsstellung in eine Außereingriffstellung mit dem Schrägholm bringt. Das Betätigungselement kann ein schwenkbeweglich gelagerter Griff sein oder ein Schiebebetätigungselement, das an der Seite beispielsweise vorsteht. Der Verriegelungszapfen kann in der Schiebestange verschiebbar gelagert sein und so ausgebildet sein, dass er in das Hohlprofil des Schrägholmes einschiebbar ist. Dies kann über einen Bowdenzug oder beispielsweise auch über eine Stange erfolgen, die im Gelenkbereich der Schiebestange an dem Schrägholm mit einer Feder ausgestattet ist. Es kann aber auch über eine seitlich geführte Stange oder über einen Bowdenzug eine Hülse verschiebbar angeordnet sein, die über ein vorstehendes Ende der Schiebestange schiebbar ist und auf dem Schrägholm gelagert ist, so dass auch hierüber im aufgestellten Zustand des Wagengestells der Verbund gesichert gehalten ist und wieder entriegelt werden kann, damit das Gestell zusammengefaltet werden kann.

In Verbindung mit parallel angeordneten Seitenteilen bietet die Erfindung darüber hinaus die Möglichkeit, auf einfache Weise einen Zwillingswagen zu realisieren, in dem alle Teile spiegelbildlich auf der anderen Seite eines Seitenteils nochmals angeordnet werden.

Die Erfindung wird nachfolgend anhand der in den Zeichnungen dargestellten Ausführungsbeispiele ergänzend erläutert.

In den Zeichnungen zeigen:
- Fig. 1: in einer perspektivischen Darstellung ein Fahrgestell nach der Erfindung im aufgestellten Zustand,
- Fig. 2: das in Fig. 1 dargestellte Fahrgestell bei Beginn einer Zusammenlegbewegung,
- Fig. 3: eine perspektivische Darstellung des Fahrgestells nach Fig. 1, nach dem die Schiebebügel bereits in einem spitzen Winkel zu den Schrägholmen verlaufend beim Zusammenlegen abgeknickt sind,
- Fig. 4: eine Seitenansicht des in Fig. 1 dargestellten Fahrgestells im aufgestellten Zustand,
- Fig. 5: in einer perspektivischen Darstellung das zusammengeklappte Fahrgestell,
- Fig. 6: eine Seitenansicht des zusammengeklappten Fahrgestells,
- Fig. 7: ein Fahrgestell nach Fig. 1 mit eingesetztem Sitzeinsatz mit fester Struktur und
- Fig. 8: einen Zwillingswagen, der mit den Elementen nach der Erfindung versehen ist.

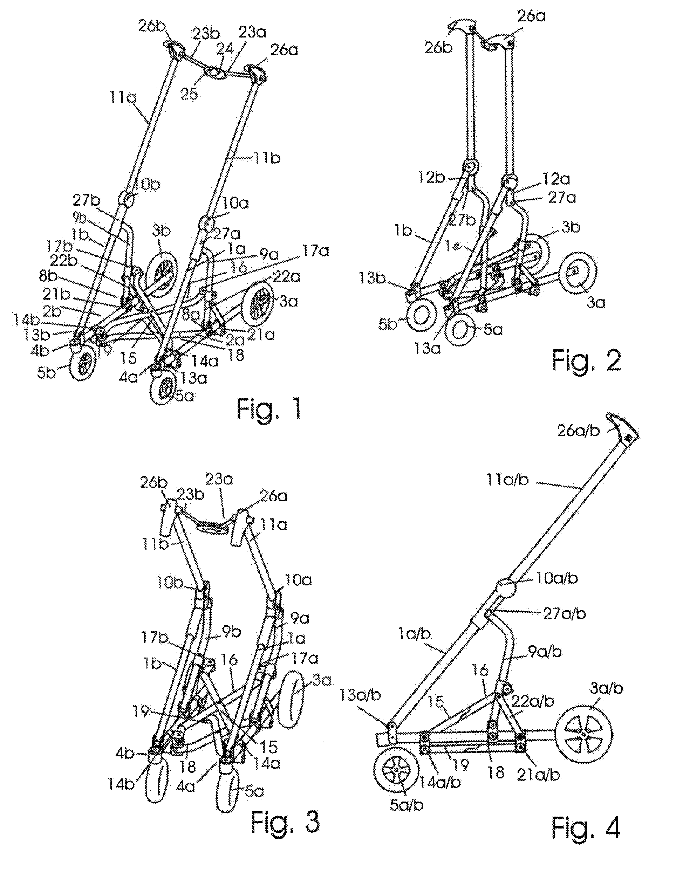

In den Fig. 1 bis 6 ist ein Fahrgestell nach der Erfindung dargestellt, das aus zwei Seitenteilen besteht, die parallel zueinander angeordnet sind. Das rechte Seitenteil besteht aus dem Schrägholm 1a, welcher über ein Gelenk 28a an einem unteren Holm 2a verschwenkbar gelagert ist. An dem unteren Holm 2a befindet sich ferner im vorderen Bereich ein Lagerhalter 4a für eine Vorderradanordnung 5a. Es handelt sich dabei um einen Lagerhalter 4a für ein einziges Vorderrad, das die Vorderradanordnung 5a bildet. Die Erfindung versteht unter "Vorderradanordnung" sowohl Einzelräder als auch Zwillingsräderanordnungen, wie sie üblicherweise bei Kinderwagen zum Einsatz kommen. Der Lagerhalter 4a weist eine, um eine senkrechte Achse verdrehbar gelagerte, nicht dargestellte Gabel oder einen einseitigen Halter auf, an dem das Rad der Vorderradanordnung 5a befestigt ist. Am Ende des unteren Holmes 2a ist ein Lagerhalter für eine Hinterradanordnung 3a befestigt. Diese kann starr ausgebildet sein, das heißt, das Hinterrad läuft stets in die gleiche Richtung und kann sich nicht um eine vertikale Achse mit der Gabel drehen, wenn das Wagengestell auf einem Boden im Kreis gefahren wird. Andere Ausführungen sind hier aber auch einsetzbar, beispielsweise ein Lagerhalter wie er bei der Vorderradanordnung 5a vorgesehen ist. Auch aus diesem Grunde ist hier nicht ein Einzelrad benannt, sondern eine Radanordnung, die auch beispielsweise aus zwei Rädern bestehen kann.

Des Weiteren ist am oberen Ende des Schrägholmes 1a ein Schwenkgelenk 10a angebracht, um welches die Schiebestange 11a nach vorne geschwenkt werden kann, was aus den Fig. 2 und 3 ersichtlich ist. Die Schiebestange 11a weist eine über das Gelenk 10a hinausgehende Verlängerung auf, die als Ende 12a bezeichnet ist (Fig. 2). An diesem Ende 12a befindet sich ein Gelenk 27a, an dem das obere Ende der abgewinkelten Stützstrebe 9a schwenkbar befestigt ist. Das untere Ende der Stützstrebe 9a ist an einem Gelenk 8a, das an dem unteren Holm 2a etwas hinter der Holmmitte angeordnet ist, schwenkbar befestigt. Am oberen Ende der Schiebestange 11a ist ein Griff 26a zum Schieben angebracht.

Auf der rechten Seite, in Fahrtrichtung gesehen, befindet sich ein baugleiches Seitenteil. Dieses besteht aus dem Schrägholm 1b, welcher über ein Gelenk 28b an einem unteren Holm 2b verschwenkbar gelagert ist. Da die Anordnung der Elemente spiegelbildlich angeordnet sind, sind die Bezugszeichen jeweils mit dem Zusatz "b" versehen. Beide Seitenteile sind nun erfindungsgemäß über ein erstes Kreuzgestänge miteinander verbunden, das aus einer Stange 15 und einer Stange 16 besteht, die beide mittig miteinander drehbar verbunden sind. Solche Kreuzgestänge sind an sich bekannt und können aus Profilrohr oder aus Profilrohr mit abgeflachten Zonen bestehen, um ein leichteres Verschwenken der Stangen 15 und 16 gegeneinander zu ermöglichen. Die Endstücke sind darüber hinaus abgewinkelt, so dass hierüber eine zu der Stützstrebe 9a, 9b oder dem jeweiligen Holm 1a, 1b; 2a, 2b parallele Ausrichtung im aufgestellten Zustand des Gestells gegeben ist.

Die Stange 16 des ersten Kreuzgestänges ist mit dem vorderen Ende an einem Schwenkgelenk 14b gelagert, welches Schwenkgelenk fest auf dem unteren Holm 2b angeordnet ist. Das Gelenk 14b selbst ist als Dreh-/Schwenkgelenk ausgebildet, das heißt, es kann sowohl um eine horizontale Achse als auch um eine hierzu senkrechte Achse bewegt werden. Dadurch ist eine Nachführung der Stange 16 in jede Drehposition möglich. Das hintere Ende der Stange 16 hingegen ist an einem verschiebbar gelagerten Drehgelenk 17a befestigt. Dieses Drehgelenk 17a weist eine Schiebehülse auf, mit der es auf der Stützstrebe 9a verschiebbar gelagert ist. Die Stange 15 ist hingegen diametral angeordnet, so dass das rechte untere Ende an einem Schwenkgelenk 14a befestigt ist und das hintere Ende an einem verschiebbaren Drehgelenk 17b, das auf der linken Stützstrebe 9 verschiebbar gelagert ist.

Des Weiteren sind beide Seitenteile über ein zweites Kreuzgestänge, das zwischen den beiden parallel verlaufenden unteren Holmen 2a und 2b zwischengefügt ist, miteinander verbunden. Im Ausführungsbeispiel weist das Schwenkgelenk 14a und 14b eine zusätzliche Aufnahme mit Lagerstellen für die verschwenkbaren vorderen Stangenenden der Stangen 18 und 19 auf. Die Stange 19 ist vorderseitig an dem Schwenkgelenk 14a befestigt, das vordere Ende der Stange 18 hingegen an dem gegenüberliegenden Schwenkgelenk 14b. Die hinteren Enden der beiden sich überkreuzenden und im Kreuzungspunkt miteinander drehbar verbundenen Stangen 18, 19 sind an Verschiebegelenken 21a bzw. 21b schwenkbar befestigt. Diese Verschiebegelenke 21a, 21b sind mittels Hülsen auf den unteren Holmen 2a, 2b befestigt. Die Holme bestehen üblicherweise auch aus einem Profilrohr wie die übrigen Holme, Stangen und Streben.

Die Verschiebegelenke 21a, 21b sind darüber hinaus aber auch kinematisch mit den Stützstreben 9a, 9b gekoppelt, und zwar über die vorgesehenen Kopplungsstangen 22a, 22b, die einerseits an den Stützstreben 9a, 9b und andererseits an den Verschiebegelenken 21a, 21b angelenkt sind. Der Anlenkungspunkt an den Stützstreben 9a, 9b liegt unterhalb der verschiebbaren Drehgelenke 17a, 17b. Die Seitenansicht in Fig. 4 zeigt den dreieckförmigen Aufbau in der Aufstellposition. Die Einzelteile, die hier von Wichtigkeit sind, sind dabei eingezeichnet und mit Bezugszeichen versehen. Da die Einzelteile bereits in den Fig. 1 bis 3 angegeben sind, soll die Seitenansicht lediglich verdeutlichen, dass alle Teile links und rechts gleich angeordnet sind, so dass diese deckungsgleich verlaufen.

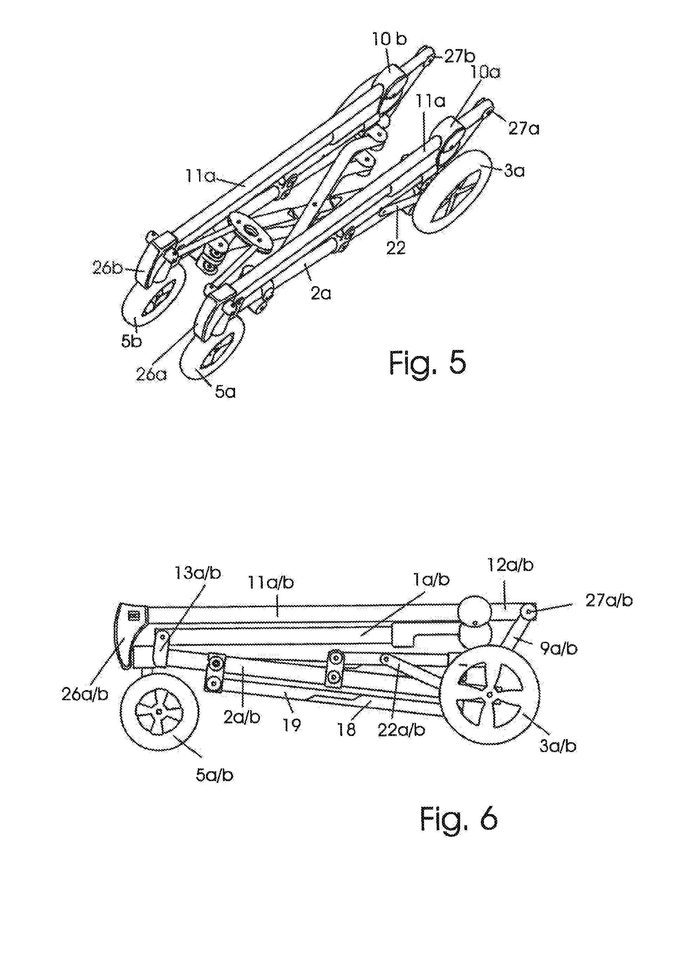

Zwischen den beiden Schiebegriffen 26a, 26b ist ferner ein Spreizgestänge angebracht, das aus den Stangen 23a und 23b besteht. Die Stangen 23a und 23b sind jeweils an Schwenklagern an den Griffen 26a und 26b verschwenkbar gelagert und enden in einem Schlosssystem 24. Hier sind sie ebenfalls schwenkbar gelagert und können durch das Schlosssystem 24 in einer gestreckten Position das Gestell zusätzlich obenseitig aufspreizen bzw. die Schiebestangen 11a, 11b auf Abstand halten. Hierüber ist auch zugleich eine Sicherung im Aufstellungszustand gegeben, selbst dann, wenn keine weiteren Sicherungen zum Feststellen des aufgestellten Verbundes gegeben sind. Um die Sicherung wieder zu lösen, ist ein Auflösemechanismus 25, verkörpert durch eine Taste im Schlosssystem 24, enthalten. Durch Druck auf die Taste können die Stangen 23a und 23b wieder zusammengeführt werden, was beispielsweise aus Fig. 3 ersichtlich ist. In Fig. 5 ist in einer perspektivischen vereinfachten Darstellung die Endposition sichtbar. Alternativ kann auch ein faltbarer oder ein wegklappbarer Schiebebügel vorgesehen sein. Letzterer ist an einer Schiebestange angelenkt und an der anderen Schiebestange lösbar befestigt.

Das Gestell kann also sowohl in vertikaler als auch in horizontaler Richtung vollständig zusammengefahren werden. Dies wird bewirkt durch eine Bewegungstransformation beim Vorschwenken der Schiebestangen 11a, 11b, nachdem das Spreizgestänge deaktiviert ist. Dabei werden, wie aus Fig. 2 und Fig. 3 ersichtlich, Überstandsenden 12a, 12b der verschwenkbaren Schiebestangen 11a, 11b nach hinten geschwenkt. Dieses Drehmoment wird auf die Stützstreben 9a, 9b übertragen, die ebenfalls nach hinten schwenken und über die Kopplungsstangen 22a und 22b eine Bewegungstransformation auf das Verschiebegelenk 21a, 21b bewirken. An diesen Verschiebegelenk 21a, 21b sind aber auch die Enden der Stangen 18, 19 des zweiten Kreuzgestänges angelenkt, so dass durch die Verschiebung der Verschiebegelenke 21a, 21b nach hinten automatisch das zweite Scherengestell zusammengezogen wird. Dieser Bewegung folgt auch das erste Scherengestell, wobei gleichzeitig die verschiebbaren Drehgelenk 17a, 17b nach oben verschoben werden, was aus Fig. 3 ersichtlich ist.

Wenn die Schiebestangen 11a, 11b vollständig nach vorne verschwenkt sind, was aus Fig. 5 ersichtlich ist, weist das Fahrgestell einen so kleinen Verstauraum auf, dass es in jeden Kofferraum eines Fahrzeugs bequem eingestellt werden kann. Dies ist auch dann noch möglich, wenn zwischen den Schrägholmen 1a, 1b und gegebenenfalls auch zwischen den Schiebestangen 11a, 11b ein Sitzeinsatz aus Stoff vorgesehen ist, der mindestens von den Schrägholmen gehalten wird. Die Aufnahmen und Haltemittel für einen Liegeeinsatz bzw. einen Babyträger oder für einen Sitzeinsatz sind nicht näher dargestellt, da solche Befestigungen, seien es Haken, Ösen, Stangen oder Adapter, als solche bekannt sind. Die Einsätze selbst müssen vor dem Zusammenlegen herausgenommen werden. Beim Sitz aus Stoff ist dies nicht erforderlich.

In Fig. 6 ist eine Seitenansicht des zusammengelegten Fahrgestells dargestellt. Durch die Anordnung der beiden Kreuzgestänge und die Verwendung von Stützstreben ist ein außerordentlich stabiles Fahrgestell im aufgestellten Zustand gegeben, das auf kleinstem Raum zusammenlegbar ist. So konnte die Gesamtlänge des zusammengelegten Fahrgestells auf 70 cm gegenüber 100 cm bei bekannten Ausführungen verringert werden.

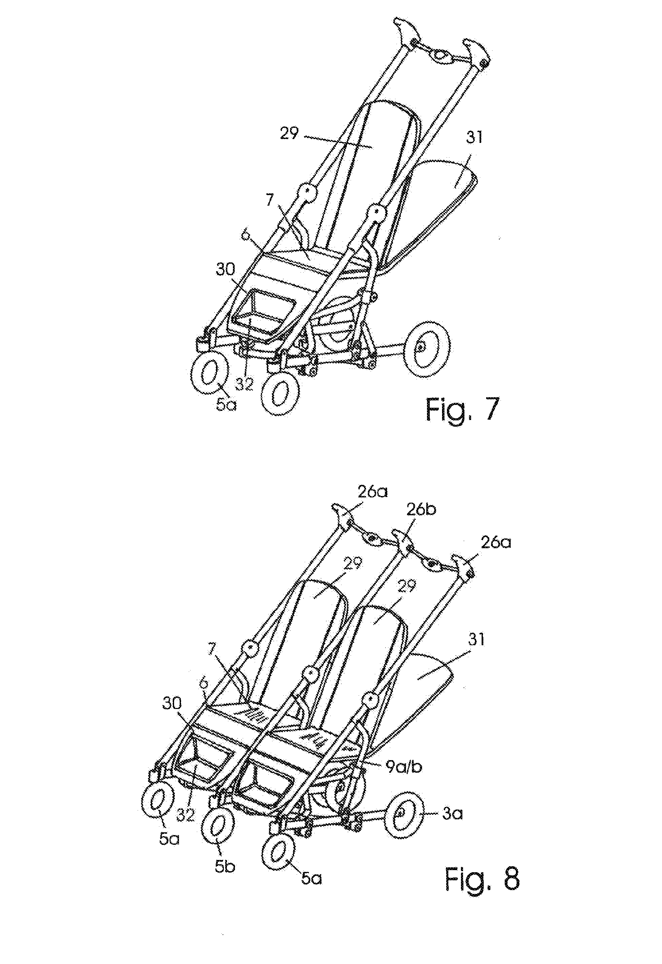

In der Fig. 7 ist das Fahrgestell mit einem Sitzeinsatz 7 dargestellt. Dieser Sitzeinsatz 7 besteht aus einem horizontalen Sitzteil und einer Rückenlehne 29 sowie einem Fußstützteil 30. Die Befestigungspunkte 6 sind nur angedeutet. Diese hängen jeweils von der Ausführungsform des Einsatzes ab. Die Rückenlehne 29 kann ferner in mindestens eine Neigungsposition 31 verbracht werden. Der Fußstützteil 30 weist eine Ausnehmung 32 auf, auf deren Bodenplatte die Füße aufstellbar sind.

Aus den Figuren ist ersichtlich, dass eine weitere Anordnung gespiegelt an ein Seitenelement angebracht werden kann. Das Ergebnis daraus ist aus Fig. 8 zu ersehen, nämlich ein Zwillingswagen mit zwei Sitzeinsätzen.

### Bezugszeichenliste

- 1a: Schrägholm
- 1b: Schrägholm
- 2a: unterer Holm
- 2b: unterer Holm
- 3a: Hinterradanordnung
- 3b: Hinterradanordnung
- 4a: Lagerhalter
- 4b: Lagerhalter
- 5a: Vorderradanordnung
- 5b: Vorderradanordnung
- 6: Betätigungspunkt
- 7: Sitzeinsatz
- 8a: Gelenk
- 8b: Gelenk
- 9a: Stützstreben
- 9b: Stützstreben
- 10a: Schwenklager
- 10b: Schwenklager
- 11a: Schiebestange
- 11b: Schiebestange
- 12a: Ende
- 12b: Ende
- 13a: Gelenk
- 13b: Gelenk
- 14a: Schwenkgelenk
- 14b: Schwenkgelenk
- 15: Stange
- 16: Stange
- 17a: Drehgelenk
- 17b: Drehgelenk
- 18: Stange
- 19: Stange
- 20a: Gelenk
- 20b: Gelenk
- 21a: Verschiebegelenk
- 21b: Verschiebegelenk
- 22a: Kopplungsstange
- 22b: Kopplungsstange
- 23a: Stangen
- 23b: Stangen
- 24: Schlosssystem
- 25: Auslösemechanismus
- 26a: Griff
- 26b: Griff
- 27a: Gelenk
- 27b: Gelenk
- 29: Rückenlehne
- 30: Fußstützteil
- 31: Neigungsposition
- 32: Ausnehmung

## Patentansprüche

1. Fahrgestell, insbesondere für einen Kinder- oder Puppenwagen, aufweisend zwei Seitenteile aus je einem von vorne nach hinten und von unten nach oben ansteigenden Schrägholm (1a, 1b) und einem hiermit untenseitig gelenkig verbundenen unteren Holm (2a, 2b), der sich von vorne nach hinten erstreckt und an dem rückseitigen Ende mindestens einen Lagerhalter (4a, 4b) für eine Hinterradanordnung (3a, 3b) und an dem vorderen Ende mindestens einen Lagerhalter (4a, 4b) für eine Vorderradanordnung (5a, 5b) aufweist, und Aufnahmen und/oder Befestigungspunkte (6) mindestens an den Schrägholmen für die Befestigung eines Sitz- (7) und/oder Liegeeinsatzes, wobei an jedem Seitenteil in paralleler Zuordnung
- an dem unteren Holm ein Gelenk (8a, 8b) für eine Stützstrebe (9a, 9b) vorgesehen ist, die obenseitig gelenkig an einem unteren Ende (12a, 12b) einer um ein Schwenklager (10a, 10b) an dem Schrägholm (1a, 1b) vorklappbar gelagerten Schiebestange (11a, 11b), welches Ende (12a, 12b) das Schwenklager übersteht, oder an einem Verschiebelager am Schrägholm (1a, 1b) schwenkbeweglich befestigt ist,
- zwischen dem Gelenk (13a, 13b) des Schrägholmes (1a, 1b) an dem unteren Holm (2a, 2b) und dem Gelenk (8a, 8b) für die Stützstrebe (9a, 9b) an dem unteren Holm (2a, 2b) ein Schwenkgelenk (14a, 14b) mit einer Aufnahme zur schwenkbeweglichen Lagerung des vorderen Endes einer Stange (15, 16) eines ersten Kreuzgestänges vorgesehen ist, dessen hinteres Ende schwenkbeweglich an einem verschiebbar auf oder an der Stützstrebe (9b) des anderen Seitenteils angebrachten Drehgelenk (17a, 17b; 21a, 21b) befestigt ist, und
- ein zweites Kreuzgestänge zwischen den unteren Holmen (2a, 2b) angebracht ist, wobei die vorderen Enden der Stangen (18, 19) des zweiten Kreuzgestänges um je eine vertikale Achse schwenkbar an je einem Gelenk (20a, 20b) befestigt sind und die hinteren Enden der Stangen (18, 19) um eine vertikale Achse schwenkbar an je einem Verschiebegelenk (21a, 21b) auf dem unteren Holm (2a, 2b) des jeweils anderen Seitenteils angebracht sind.

2. Fahrgestell nach Anspruch 1, **dadurch gekennzeichnet, dass** an mindestens einer Stützstrebe (9a, 9b) eine Kopplungsstange (22a, 22b) angelenkt ist, die zur Bewegungstransformation der Schwenkbewegung der Stützstrebe (9a, 9b) an einem Verschiebegelenk (21a, 21b) auf dem unteren Holm angelenkt ist, wobei sich beim Zusammenlegen des Gestells das Verschiebegelenk (21a, 21b) in Richtung des Lagerhalters für die Hinterradanordnung (3a, 3b) und beim Aufstellen nach vorne bewegt.

3. Fahrgestell nach Anspruch 2, **dadurch gekennzeichnet, dass** an den Verschiebegelenken (21a, 21b) auch die hinteren Enden der Stange (18, 19) des zweiten unteren Kreuzgestänges angebracht sind.

4. Fahrgestell nach einem der vorhergehenden Ansprüche, **dadurch gekennzeichnet, dass** das Fahrgestell aus zwei parallel angeordneten, im aufgestellten Zustand im wesentlichen dreieckförmigen Seitenteilen besteht, die beim Vorschwenken der Schiebestangen (11a, 11b) auf einander zwangsweise zufahren oder durch seitliche Druckausübung zusammendrückbar sind.

5. Fahrgestell nach einem der vorhergehenden Ansprüche, **dadurch gekennzeichnet, dass** zwischen den Schiebestangen (11a, 11b) ein Sicherungsgestänge aus zwei schwenkbeweglich an den Schiebestangen (11a, 11b) gelagerten Stangen (23a, 23b) vorgesehen ist, deren beiden inneren Enden in einem Schlosssystem (24) gelagert sind, das die beiden Stangen (23a, 23b) in einer gestreckten Position hält, wenn das Wagengestell sich im aufgestellten Zustand befindet und bei Betätigung eines Auslösemechanismus (25) das Zusammenfalten der beiden Stangen (23a, 23b) für ein Zusammenlegen des Wagengestells freigibt.

6. Fahrgestell nach Anspruch 1, **dadurch gekennzeichnet, dass** an den verschiebbaren Drehgelenken (17a, 17b) an den Stützstreben (9a, 9b) federbelastete Rasten vorgesehen sind, die mindestens im aufgestellten Zustand des Wagengestells in korrespondierende Ausnehmungen in den Stützstreben (9a, 9b) sichernd einrasten und über Auslöserhebel herausziehbar sind.

7. Fahrgestell nach Anspruch 1, **dadurch gekennzeichnet, dass** zwischen den Stützstreben (9a, 9b) ein weiteres oder alternativ zu dem zweiten ein Kreuzgestänge angegebener Art oder ein Spreizgestänge aus mindestens zwei Stangen, die mittig miteinander direkt oder über ein Stellglied verbunden sind und außenseitig an den Stützstreben angelenkt sind, vorgesehen ist.

8. Fahrgestell nach einem der vorhergehenden Ansprüche, **dadurch gekennzeichnet, dass** spiegelbildlich zu einem mittigen Seitenteil alle Teile eines Fahrgestells, wie Kreuzgestänge, Verbindungspunkte, Seitenteile, Radanordnungen, zur Bildung eines Zwillingswagens beidseitig angeordnet sind.

9. Fahrgestell nach Anspruch 1, **dadurch gekennzeichnet, dass** an mindestens einem der Griffe (26a, 26b) ein Betätigungselement angebracht ist, das mit einem Gestänge oder mit einem Bowdenzug gekoppelt ist, der in oder an der Schiebestange (11a, 11b) geführt ist und einen Verriegelungszapfen am unteren Ende der Schiebestange (11a oder 11b) oder eine übergleitende Hülse aus einer Verriegelungsstellung in eine Außereingriffstellung mit dem Schrägholm (1a, 1b) bringt.
